# FASCICULE DE BREVET EUROPEEN

(11) **EP 2 299 552 B1**
(45) Date de publication et mention de la délivrance du brevet: **21.08.2013**
(21) Numéro de dépôt: 10354032.4
(22) Date de dépôt: 17.06.2010
(51) Int. Cl.: H02B 1/30

(54) **Coffret destiné à recevoir un appareillage électrique basse tension associé à une cellule électrique moyenne tension**
Gehäuse zur Aufnahme eines Niedrigspannungsgeräts, das mit einer Schaltgerätzelle mittlerer Spannung verbunden ist
Box intended to receive a low-voltage electrical device associated with a medium-voltage switchgear cell

(30) Priorité: 17.09.2009 FR 0904443
(43) Date de publication de la demande: 23.03.2011
(73) Titulaire: Schneider Electric Industries SAS, 92500 Rueil-Malmaison (FR)
(72) Inventeur: Maquet, Patrick, 38050 Grenoble Cedex 09 (FR)
(74) Mandataire: Colette, Marie-Françoise

(56) Documents cités:
- EP-A2- 0 143 718
- DE-U- 6 750 456
- DE-U1- 29 713 991
- US-A- 5 735 411

## Description

La présente invention concerne un coffret destiné à recevoir un appareillage électrique basse tension et associé à une cellule moyenne tension, ledit coffret comportant une enveloppe de forme sensiblement parallélépipédique comportant une paroi de fond destinée à supporter l'appareillage électrique, une paroi inférieure destinée à être fixée à la cellule, une paroi supérieure formant toit, deux parois latérales par lesquelles deux coffrets associés respectivement à deux cellules juxtaposées peuvent être accolés, et une porte constituant la face avant du coffret.

On connaît un compartiment basse tension du genre précédemment mentionné tel que décrit dans le brevet WO 93/10691. Dans ce document, le compartiment basse tension est logé dans une enveloppe constituée par une structure en profilés réalisant le châssis de l'enveloppe sur lequel on vient ensuite rapporter par vissage, clipsage ou rivetage, des panneaux d'habillage. Ce compartiment, du fait de la présence du châssis, présente un encombrement important qui représente une gêne pour le câblage. En outre, ce coffret met en oeuvre un nombre de pièces important, d'où un coût de fabrication et un temps de montage importants.

On connaît également (voir EP0143718) un compartiment basse tension logé dans une enveloppe constituée par une plaque de fond sur laquelle sont fixés quatre piliers d'angle sur lesquels viennent se fixer des panneaux d'habillage de l'enveloppe. Ce type de structure est légèrement plus simple que la précédente, mais présente encore un certain encombrement du fait de la présence des piliers.

Et l'on connaît également un coffret basse tension constitué par une plaque de fond en forme de coiffe sur laquelle vient se rapporter une seconde coiffe. Ce compartiment présente également un encombrement important car la première coiffe est préfixée.

Tous ces coffrets présentent l'inconvénient principal de présenter une accessibilité réduite depuis la face avant, pour réaliser le câblage et le montage des appareils dans le coffret. Ceci est d'autant plus vrai lorsque les coffrets sont juxtaposés à d'autres coffrets du fait de la juxtaposition des cellules auxquelles ces coffrets sont associés.

En outre, dans le cas d'une juxtaposition des cellules, ces coffrets ne sont pas démontables facilement individuellement depuis la face avant des cellules, d'où il résulte qu'il n'est pas aisé d'effectuer une intervention ponctuelle sans démonter les autres cellules.

La présente invention résout ces problèmes et propose un coffret électrique présentant une accessibilité maximum à partir de la face avant des cellules, ledit coffret étant entièrement démontable à partir de la face avant des cellules, en cas de juxtaposition de cellules, ledit coffret étant réalisé avec un minimum de pièces, d'où un coût de fabrication réduit.

A cet effet, la présente invention a pour objet un coffret électrique du genre précédemment mentionné, ce coffret étant **caractérisé en ce que** les différentes parois précitées sont réalisées par de simples pièces en tôle pliée, les différentes parois étant encastrables les unes par rapport aux autres par l'intermédiaire de formes du type mâle/femelle obtenues directement dans le débit à plat des tôles, lesdites parois étant fixées les unes aux autres par l'intermédiaire de moyens de verrouillage, le montage et le câblage des appareils électriques sur la paroi de fond pouvant être réalisé préalablement à la fixation des autres parois respectivement, la paroi supérieure, les parois latérales et la porte, avec une totale accessibilité pour l'opérateur.

Selon une caractéristique particulière, la porte constituant la face avant du coffret est montée articulée par rapport à la paroi inférieure du coffret par l'intermédiaire de moyens d'articulation comportant chacun une partie mâle et une partie femelle réalisés dans le débit à plat respectivement de la porte et de la paroi inférieure.

Selon une caractéristique particulière, la partie mâle est constituée par une languette réalisée dans le débit à plat de la tôle constituant la face avant ou porte, et la partie femelle est constituée par une simple découpe réalisée dans la paroi inférieure précitée.

Selon une caractéristique particulière, les moyens de verrouillage précités comprennent des vis et des écrous.

Selon une autre caractéristique, la paroi inférieure est constituée par une tôle comportant deux bords longitudinaux pliés à angle droit, dont l'un comporte les moyens d'articulation de la paroi inférieure à la porte, et l'autre, des moyens de fixation de la paroi inférieure à la paroi de fond.

Selon une autre caractéristique, la paroi de fond est constituée par une tôle comportant deux bords longitudinaux pliés à angle droit dont l'un comporte les moyens de fixation de ladite paroi de fond à la paroi supérieure, et dont l'autre, comporte des moyens de fixation de la paroi de fond à la paroi inférieure, et deux bords latéraux pliés deux fois à angle droit dont l'extrémité comporte des moyens de fixation d'un support d'appareils électriques.

Selon une autre caractéristique, les parois latérales sont constituées par une tôle comportant deux bords longitudinaux et pliés à angle droit destinés à coopérer respectivement avec deux bords latéraux et non pliés à angle droit respectivement de la paroi supérieure et de la paroi inférieure, et un bord latéral plié à angle droit destiné à coopérer avec un bord latéral non plié en équerre de la porte.

Selon une autre caractéristique, la paroi supérieure est constituée par une tôle comportant deux bords longitudinaux, dont l'un plié en équerre, est destiné à coopérer avec le bord correspondant plié en équerre de la paroi de fond, et dont l'autre, est plié deux fois, et coopère avec des moyens d'accrochage de la porte à la paroi supérieure.

Selon une autre caractéristique, ce coffret comporte des moyens de pré-positionnement des parois latérales par rapport à la paroi de fond.

Selon une autre caractéristique, ce coffret comporte des moyens de pré-positionnement des parois latérales par rapport à la paroi inférieure.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective d'une enveloppe d'un coffret électrique selon l'invention destiné à loger un appareillage électrique basse tension,
- La figure 2 est une vue éclatée de la figure précédente,
- La figure 3 est une vue éclatée du même coffret, équipé d'une partie de l'appareillage électrique,
- La figure 4 est une vue en perspective illustrant plusieurs cellules moyenne tension juxtaposées, associées chacune à un coffret électrique selon l'invention,

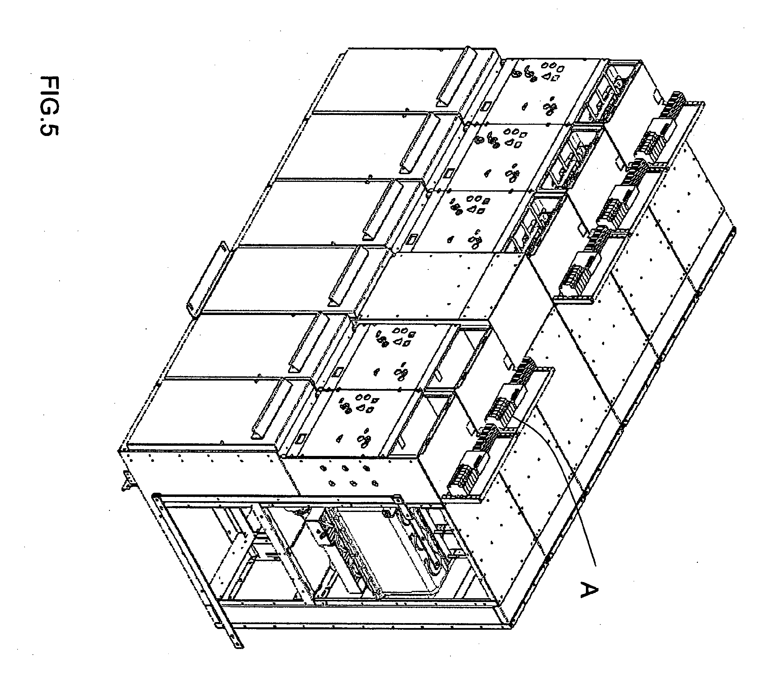

- La figure 5 est une vue identique à celle de la figure précédente, les parois latérales, la paroi supérieure et la porte du coffret ayant été retirées,

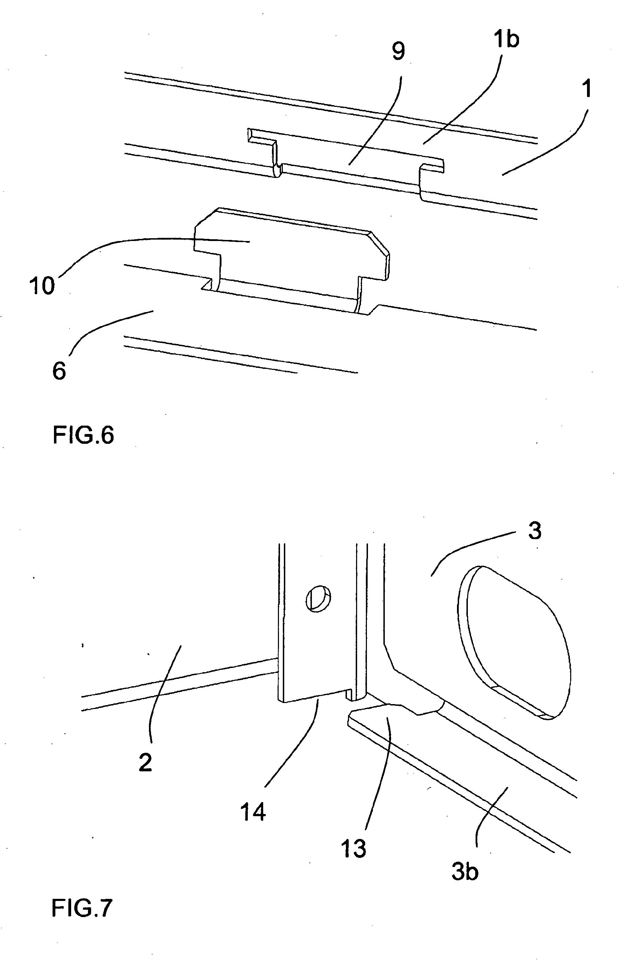

- La figure 6 est une vue partielle en perspective, illustrant la charnière reliant la porte du coffret à la paroi de fond dudit coffret,
- La figure 7 est une vue partielle en perspective, illustrant le pré-positionnement d'une paroi latérale par rapport à la paroi de fond du coffret, en face arrière, et

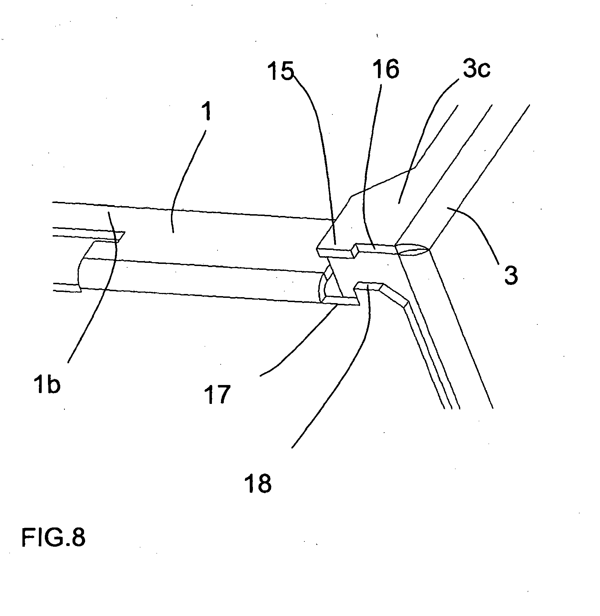

- La figure 8 est une vue en perspective partielle, illustrant le pré-positionnement d'une paroi latérale par rapport à la paroi inférieure du coffret, en face avant,

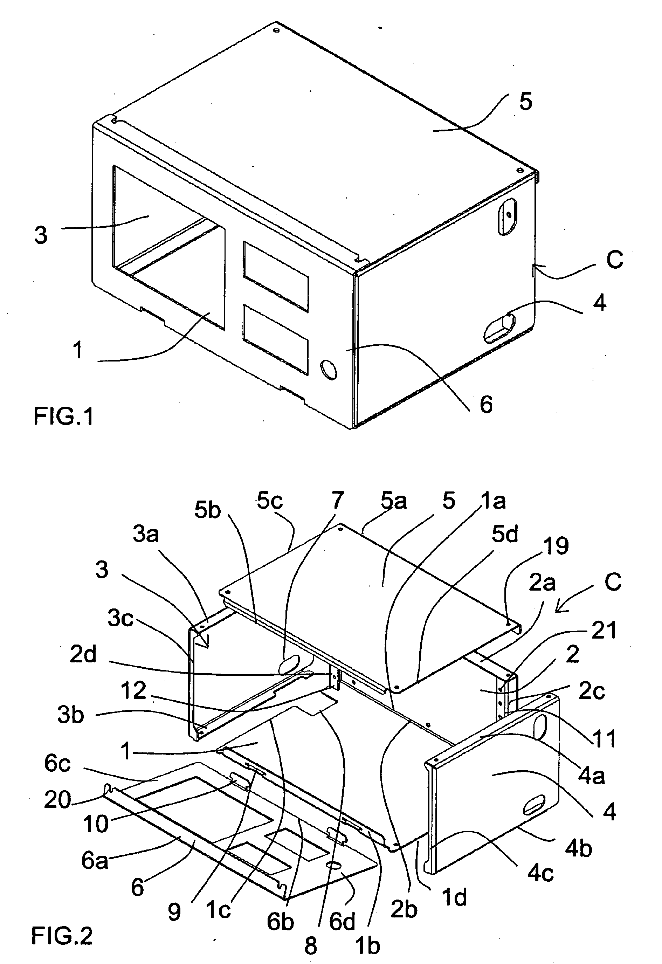

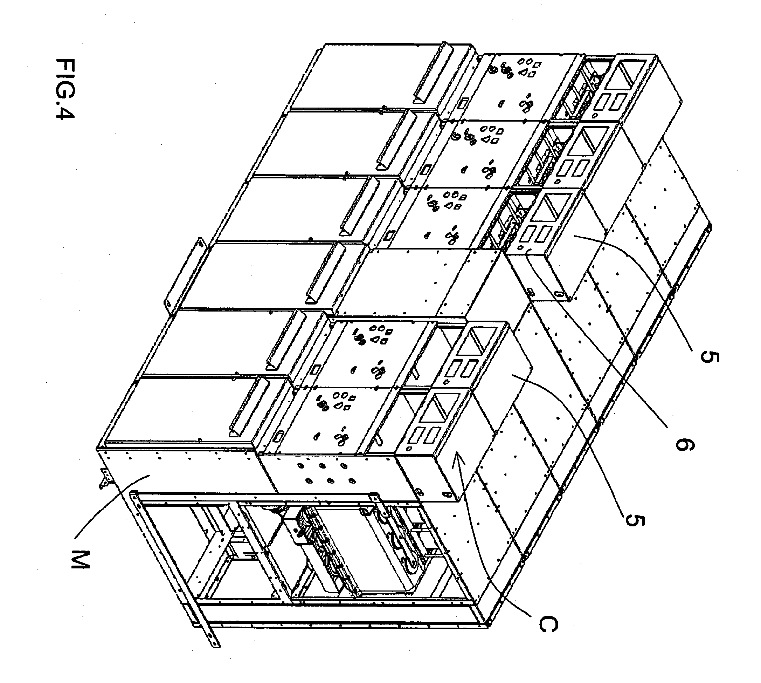

Sur les figures 1 et 2, on voit un coffret électrique C destiné à loger un appareillage électrique basse tension comportant des appareils tels des interrupteurs, disjoncteurs, relais de protection, etc..., ledit coffret étant destiné à être associé à une cellule moyenne tension M tel qu'illustré sur la figure 4, plusieurs cellules pouvant être juxtaposées suivant une même ligne.

Ce coffret C est de forme sensiblement parallélépipédique et comporte une paroi inférieure 1 par laquelle ledit coffret est destiné à être fixé à une cellule M, une paroi de fond 2 destinée à supporter les appareils électriques A, deux parois latérales 3,4 par lesquelles deux coffrets peuvent être juxtaposés, une paroi supérieure 5 formant toit et une porte 6 constituant la face avant du coffret C.

La paroi inférieure 1 et les parois latérales 3,4 comportent des orifices 7,8 permettant le passage des câbles d'un coffret à l'autre et d'un coffret à la cellule associée.

La paroi inférieure 1 est constituée par une plaque présentant deux bords longitudinaux 1a,1b pliés en équerre, dont l'un 1a comporte des moyens de fixation de la paroi inférieure à la paroi de fond 2, et dont l'autre 1 b comporte des échancrures 9 destinées à coopérer avec des languettes 10 venues de matière avec la porte 6 constituant la face avant du coffret, lesdites languettes 10 s'étendant sensiblement perpendiculairement au plan de ladite porte 6 de manière à former une charnière.

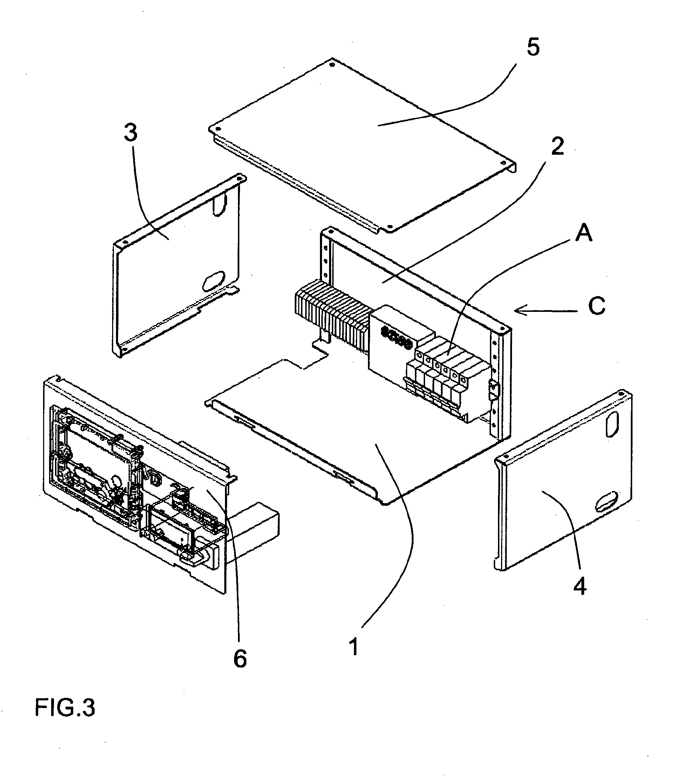

La paroi de fond 2 comporte deux bords longitudinaux opposés 2a,2b pliés en équerre, et deux bords latéraux 2c,2d pliés deux fois en équerre, dont les extrémités forment respectivement deux supports 11,12 s'étendant dans un plan parallèle à la paroi de fond 2, lesdits supports 11,12 comportant des orifices 21 permettant la fixation d'un rail S de support des appareils sur la paroi de fond 2, tel qu'illustré sur la figure 3.

Les deux parois latérales 3,4 comportent deux bords longitudinaux 3a,3b et 4a,4b pliés en équerre, et un bord latéral 3c,4c plié également en équerre. Les deux premiers bords longitudinaux 3a,3b sont destinés à servir de surface d'appui à deux extrémités libres en regard 5c,1 c appartenant respectivement à la paroi supérieure 5 et à la paroi inférieure 1 du coffret, tandis que le bord latéral plié en équerre 3c,4c, est destiné à servir d'appui au bord latéral 6c,6d situé en regard appartenant à la porte 6.

La paroi supérieure 5 du coffret C comporte deux bords longitudinaux 5a,5b dont l'un 5a, est plié en équerre, et dont l'autre 5b, est plié sensiblement en équerre, et est destiné à coopérer avec le bord longitudinal 6a de la porte 6 opposé à celui 6b comportant les languettes 10, ledit bord longitudinal 6a comportant des moyens d'accrochage 20.

La fixation définitive des parois les unes par rapport aux autres s'effectue au moyen de vis, d'écrous (non représentés) et d'orifices (19) prévus dans les parois. Mais d'autres réalisations pourraient être envisagées tels des rivets, clips, en fait tout mode de fixation démontable.

Ce coffret présente également des moyens de pré-positionnement des parois latérales 3,4 par rapport à la paroi de fond 2, ainsi que des moyens de pré-positionnement de la paroi inférieure 1 par rapport aux parois latérales 3,4. Les premiers moyens précités comportent une proéminence 13 prévue sur chaque bord longitudinal inférieur plié en équerre des parois latérales 3,4, lesdites proéminences 13 coopérant avec des évidements 14 prévus à la partie inférieure des bords latéraux 2c pliés deux fois en équerre de la paroi de fond 2.

Les seconds moyens comportent une proéminence 15 et un évidement 16 prévus à la partie inférieure des bords latéraux 3c,4c des parois latérales 3,4 et coopérant avec des parties de forme complémentaire 17,18 prévues à l'extrémité du bord longitudinal 1b de la paroi inférieure 1 situé à l'avant du coffret.

Le montage du coffret va être décrit ci-après en référence aux figures:
Tout d'abord, la paroi inférieure 1 est fixée à la paroi de fond 2 du coffret C. Puis, cette paroi inférieure 1 est fixée à la cellule M associée audit coffret. Les appareils peuvent alors être fixés sur la paroi de fond du coffret, celui-ci présentant pour ce faire une accessibilité totale à partir de la face avant du coffret, laquelle est totalement dégagée, tel qu'illustré sur la figure 3.

Après cela, les parois latérales 3,4 sont pré-positionnées sur la paroi de fond 2 et la paroi inférieure 1, grâce aux moyens de pré-positionnement précités. Puis, la paroi supérieure 5 est fixée sur les parois latérales 3,4 et la paroi de fond 2 et les languettes 10 de la porte 6 sont introduites dans les échancrures correspondantes 9 de manière à réaliser le montage articulé de la porte 6 par rapport à la paroi inférieure 1.

Lorsque plusieurs cellules sont juxtaposées, il est alors possible d'extraire un coffret sans qu'il soit nécessaire de démonter des éléments adjacents des coffrets, tel qu'illustré sur la figure 4, sur laquelle un coffret est manquant à l'ensemble. Ceci est réalisé en retirant successivement la porte, puis la paroi supérieure du coffret, puis les parois latérales, puis la paroi inférieure et la paroi de fond.

Il est également possible de ne retirer que deux parois latérales de manière à permettre l'accès à la totalité de la longueur du tableau, ou bien de retirer deux parois latérales, la porte et la paroi supérieure.

On a donc réalisé grâce à l'invention une enveloppe entièrement démontable en face avant, offrant une accessibilité maximum pour le montage et le câblage avec un minimum de vis et de pièces, le tout pour un coût minimum.

L'invention permet de s'affranchir des contraintes habituelles d'encombrement, en offrant une accessibilité totale sans châssis ou pièces rapportées qui pourraient gêner le tableautier.

Il est ainsi très facile de réaliser le montage et le câblage de l'appareillage électrique se logeant à l'intérieur de l'enveloppe. L'assemblage final de l'enveloppe s'effectue ensuite rapidement par une mise en place simple des différents éléments (flancs latéraux, toit, porte). Le verrouillage/bridage de l'ensemble se réalise avec seulement 4 vis. Les moyens de verrouillage sont ainsi réduits au minimum.

Le fait que l'ensemble est entièrement démontable depuis la face avant est particulièrement intéressant dans le cas d'enveloppes juxtaposées. Cela permet en effet d'intervenir directement sur l'avant de la partie concernée sans démontage d'élément adjacents.

Le système d'articulation de la porte est réalisé directement dans le débit à plat des deux pièces concernées et ne nécessite aucune pièce supplémentaire. L'ensemble de l'enveloppe est réalisé à partir de l'assemblage de simples pièces de tôlerie sans élément rapporté, mis à part les moyens de verrouillage.

Ces pièces sont toutes obtenues en pliage traditionnel et ne nécessitent pas de process spécifique.

Les encliquetages des pièces sont obtenues par des combinaisons de formes male/femelle obtenues directement dans le débit à plat des tôles.

L'articulation de la face avant est également obtenue directement à partir du débit à plat de tôle de face avant pour la partie mâle, combinée à une simple découpe dans le fond pour la partie femelle.

Tout ceci permet une mise en oeuvre simple, rapide et sans outil pour un coût relativement faible.

Bien entendu, l'invention n'est pas limitée aux modes de réalisations décrits et illustrés qui n'ont été donnés qu'à titre d'exemple.

## Revendications

1. Coffret destiné à recevoir un appareillage électrique basse tension et associé à une cellule moyenne tension, ledit coffret comportant une enveloppe de forme sensiblement parallélépipédique comportant une paroi de fond destinée à supporter l'appareillage électrique, une paroi inférieure destinée à être fixée à la cellule, une paroi supérieure formant toit, deux parois latérales par lesquelles deux coffrets associés respectivement à deux cellules juxtaposées peuvent être accolés, et une porte constituant la face avant du coffret,
**caractérisé en ce que** les différentes parois précitées (1,2,3,4,5,6) sont réalisées par de simples pièces en tôle pliée, les différentes parois étant encastrables les unes par rapport aux autres par l'intermédiaire de formes du type mâle/femelle obtenues directement dans le débit à plat des tôles, lesdites parois étant fixées les unes aux autres par l'intermédiaire de moyens de verrouillage (19), le montage et le câblage des appareils électriques sur la paroi de fond (2) pouvant être réalisé préalablement à la fixation des autres parois respectivement, la paroi supérieure (5), les parois latérales (3,4) et la porte (6), avec une totale accessibilité pour l'opérateur.

2. Coffret selon la revendication 1, **caractérisé en ce que** la porte (6) constituant la face avant du coffret est montée articulée par rapport à la paroi inférieure (1) du coffret par l'intermédiaire de moyens d'articulation comportant chacun une partie mâle (10) et une partie femelle (9) réalisés dans le débit à plat respectivement de la porte (6) et de la paroi inférieure (1).

3. Coffret selon la revendication 2, **caractérisé en ce que** la partie mâle est constituée par une languette (10) réalisée dans le débit à plat de la tôle constituant la face avant ou porte (6), et la partie femelle est constituée par une simple découpe (9) réalisée dans la paroi inférieure précitée (1).

4. Coffret selon l'une quelconque des revendications précédentes, **caractérisé en ce que** les moyens de verrouillage précités (19) comprennent des vis et des écrous.

5. Coffret selon l'une quelconque des revendications précédentes, **caractérisé en ce que** la paroi inférieure (1) est constituée par une tôle comportant deux bords longitudinaux (1a,1b) pliés à angle droit, dont l'un (1b) comporte les moyens d'articulation de la paroi inférieure (1) à la porte (6), et l'autre (1a), des moyens de fixation de la paroi inférieure (1) à la paroi de fond (2).

6. Coffret selon l'une quelconque des revendications précédentes, **caractérisé en ce que** la paroi de fond (2) est constituée par une tôle comportant deux bords longitudinaux (2a,2b) pliés à angle droit dont l'un (2a) comporte les moyens de fixation de ladite paroi de fond (2) à la paroi supérieure (5), et dont l'autre (2b) comporte des moyens de fixation de la paroi de fond (2) à la paroi inférieure (1), et deux bords latéraux (2c,2d) pliés deux fois à angle droit dont l'extrémité comporte des moyens de fixation (21) d'un support S d'appareils électriques.

7. Coffret selon l'une quelconque des revendications précédentes, **caractérisé en ce que** les parois latérales (3,4) sont constituées par une tôle comportant deux bords longitudinaux (3a,3b) et (4a,4b) pliés à angle droit destinés à coopérer respectivement avec deux bords latéraux (5c,1c) et (5d,1d) non pliés à angle droit respectivement de la paroi supérieure (5) et de la paroi inférieure (1), et un bord latéral (3c,4c) plié à angle droit destiné à coopérer avec un bord latéral (6c,6d) non plié en équerre de la porte (6).

8. Coffret selon l'une quelconque des revendications précédentes, **caractérisé en ce que** la paroi supérieure (5) est constituée par une tôle comportant deux bords longitudinaux (5a,5b), dont l'un (5a) plié en équerre, est destiné à coopérer avec le bord (2a) correspondant plié en équerre de la paroi de fond (2), et dont l'autre (5b), est plié deux fois, et coopère avec des moyens d'accrochage (20) de la porte (6) à la paroi supérieure (5).

9. Coffret selon l'une quelconque des revendications précédentes, **caractérisé en ce qu'**il comporte des moyens (13,14) de pré-positionnement des parois latérales (3,4) par rapport à la paroi de fond (2).

10. Coffret selon l'une quelconque des revendications précédentes, **caractérisé en ce qu'**il comporte des moyens (15,16,17,18) de pré-positionnement des parois latérales (3,4) par rapport à la paroi inférieure (1).

## Patentansprüche

1. Gehäuse zur Aufnahme von elektrischen Niederspannungs-Schaltgeräten und zum Einbau in eine Mittelspannungs-Schaltzelle, welches Gehäuse eine annähernd kastenförmige Hülle mit einer Rückwand zur Befestigung der elektrischen Schaltgeräte, einer Bodenwand zur Befestigung des Gehäuses an der Schaltzelle, einer als Dach dienenden Deckenwand, zwei Seitenwänden, über die zwei Gehäuse von zwei aneinander grenzenden Schaltzellen miteinander verbunden werden können, sowie einer die Vorderseite des Gehäuses bildenden Tür umfasst,
**dadurch gekennzeichnet, dass** die verschiedenen genannten Wände (1, 2, 3, 4, 5, 6) als einfache umgekantete Bleche ausgebildet sind und über direkt in den Flächen der Bleche ausgebildete Steck- und Aufnahmeelemente ineinander gesteckt werden können, wobei die Befestigung der genannten Wände aneinander mithilfe von Verriegelungsmitteln (19) erfolgt und die Montage und Verdrahtung der elektrischen Schaltgeräte an der Rückwand (2) vor Befestigung der übrigen Wände, d.h. der Deckenwand (5), der Seitenwände (3, 4) und der Tür (6) bei uneingeschränktem Zugang für den Monteur durchgeführt werden kann.

2. Gehäuse nach Anspruch 1, **dadurch gekennzeichnet, dass** die die Vorderseite des Gehäuses bildende Tür (6) mit Hilfe von Gelenkmitteln gelenkig an der Bodenwand (1) des Gehäuses montiert ist, welche Gelenkmittel jeweils in der Fläche der Tür (6) bzw. der Bodenwand (1) ausgebildete Steck- (10) und Aufnahmeelemente (9) umfassen.

3. Gehäuse nach Anspruch 2, **dadurch gekennzeichnet, dass** das Steckelement als in der Fläche des die Vorderseite bzw. Tür (6) bildenden Wandblechs ausgebildeter Vorsprung (10) und das Aufnahmeelement als in der genannten Bodenwand (1) eingebrachter einfacher Ausschnitt (9) ausgebildet sind.

4. Gehäuse nach irgendeinem der vorhergehenden Ansprüche, **dadurch gekennzeichnet, dass** die genannten Verriegelungsmittel (19) Schrauben und Schraubenmuttern umfassen.

5. Gehäuse nach irgendeinem der vorhergehenden Ansprüche, **dadurch gekennzeichnet, dass** die Bodenwand (1) aus einem Blech mit zwei rechtwinklig umgekanteten Längsrändern (1a, 1 b) besteht, wobei an einem Rand (1 b) Mittel zur Gelenkverbindung der Bodenwand (1) mit der Tür (6) und an dem anderen Rand (1a) Mittel zur Befestigung der Bodenwand (1) an der Rückwand (2) ausgebildet sind.

6. Gehäuse nach irgendeinem der vorhergehenden Ansprüche, **dadurch gekennzeichnet, dass** die Rückwand (2) aus einem Blech mit zwei rechtwinklig umgekanteten Längsrändern (2a, 2b), wobei an einem Rand (2a) Mittel zur Befestigung der genannten Rückwand (2) an der Deckenwand (5) und an dem anderen Rand (2b) Mittel zur Befestigung der Rückwand (2) an der Bodenwand (1) ausgebildet sind, sowie mit zwei zweifach rechtwinklig umgekanteten Seitenrändern (2c, 2d) besteht, an deren Ende Mittel (21) zur Befestigung eines Trägers S für elektrische Schaltgeräte ausgebildet sind.

7. Gehäuse nach irgendeinem der vorhergehenden Ansprüche, **dadurch gekennzeichnet, dass** die Seitenwände (3, 4) jeweils aus einem Blech mit zwei rechtwinklig umgekanteten Längsrändern (3a, 3b) bzw. (4a, 4b), die dazu dienen, mit zwei nicht rechtwinklig umgekanteten Seitenrändern (5c,1c) bzw. (5d,1d) der Deckenwand (5) und der Bodenwand (1) zusammenzuwirken, sowie einem rechtwinklig umgekanteten Seitenrand (3c, 4c) bestehen, der dazu dient, mit einem nicht rechtwinklig umgekanteten Seitenrand (6c, 6d) der Tür (6) zusammenzuwirken.

8. Gehäuse nach irgendeinem der vorhergehenden Ansprüche, **dadurch gekennzeichnet, dass** die Deckenwand (5) aus einem Blech mit zwei Längsrändern (5a, 5b) besteht, von denen einer (5a) rechtwinklig umgekantet ist und dazu dient mit dem zugeordneten, rechtwinklig umgekanteten Rand der Rückwand (2) zusammenzuwirken, und der andere (5b) zweifach rechtwinklig umgekantet ist und mit Rastmitteln (20) zur Verbindung der Tür (6) mit der Deckenwand (5) zusammenwirkt.

9. Gehäuse nach irgendeinem der vorhergehenden Ansprüche, **dadurch gekennzeichnet, dass** es Mittel (13,14) zur Vorpositionierung der Seitenwände (3,4) in der Rückwand (2) umfasst.

10. Gehäuse nach irgendeinem der vorhergehenden Ansprüche, **dadurch gekennzeichnet, dass** es Mittel (15,16,17,18) zur Vorpositionierung der Seitenwände (3,4) in der Bodenwand (1) umfasst.

## Claims

1. An enclosure designed to accommodate low-voltage electric equipment and associated with a medium-voltage cubicle, said enclosure comprising an envelope of substantially rectangular shape comprising a rear panel designed to support the electric equipment, a bottom panel designed to be fixed to the cubicle, a top panel forming a roof, two side panels by means of which two enclosures respectively associated with two juxtaposed cubicles can be adjoined, and a door constituting the front panel of the enclosure,
**characterized in that** the above-mentioned different panels (1,2,3,4,5,6) are achieved by simple parts made from folded metal sheet, the different panels being able to be engaged with respect to one another by means of forms of male/female type obtained directly in the flat output of the metal sheets, said panels being fixed to one another by means of securing means (19), assembly and wiring of the electric equipment on the rear panel (2) being able to be performed prior to fixing of the other panels, respectively the top panel (5), side panels (3,4) and door (6), with total accessibility for the operator.

2. The enclosure according to claim 1, **characterized in that** the door (6) forming the front panel of the enclosure is mounted articulated with respect to the bottom panel (1) of the enclosure by means of hinge means each comprising a male part (10) and a female part (9) made in the flat output respectively of the door (6) and of the bottom panel (1).

3. The enclosure according to claim 2, **characterized in that** the male part is formed by a tab (10) made in the flat output of the metal plate forming the front panel or door (6), and the female part is formed by a simple cut-out (9) made in the above-mentioned bottom panel (1).

4. The enclosure according to any one of the foregoing claims, **characterized in that** the above-mentioned securing means (19) comprise nuts and bolts.

5. The enclosure according to any one of the foregoing claims, **characterized in that** the bottom panel (1) is formed by a metal plate comprising two longitudinal edges (1a,1b) folded at right angles, one (1b) of which edges comprises the hinge means of the bottom panel (1) on the door (6), and the other (1a) of which edges comprises means for fixing the bottom panel (1) to the rear panel (2).

6. The enclosure according to any one of the foregoing claims, **characterized in that** the rear panel (2) is formed by a metal plate comprising two longitudinal edges (2a,2b) folded at right angles, one (2a) of which edges comprises means for fixing said rear panel (2) to the top panel (5), and the other (2b) of which edges comprises means for fixing the rear panel (2) to the bottom panel (1), and two lateral edges (2c,2d) folded twice at right angles the end of which comprises means for fixing (21) a support S for electric equipment units.

7. The enclosure according to any one of the foregoing claims, **characterized in that** the side panels (3,4) are formed by a metal plate comprising two longitudinal edges (3a,3b) and (4a,4b) folded at right angles designed to collaborate respectively with two lateral edges (5c,1c) and (5d,1d) not folded at right angles respectively of the top panel (5) and of the bottom panel (1), and a lateral edge (3c,4c) folded at right angles designed to collaborate with a lateral edge (6c,6d) of the door (6) not folded to form a bracket.

8. The enclosure according to any one of the foregoing claims, **characterized in that** the top panel (5) is formed by a metal sheet comprising two longitudinal edges (5a,5b), one (5a) of which edges is folded to form a bracket and is designed to collaborate with the corresponding edge (2a) of the rear panel (2) folded to form a bracket, and the other (5b) of which edges is folded twice and collaborates with means for securing (20) the door (6) to the top panel (5).

9. The enclosure according to any one of the foregoing claims, **characterized in that** it comprises means (13,14) for pre-positioning the side panels (3,4) with respect to the rear panel (2).

10. The enclosure according to any one of the foregoing claims, **characterized in that** it comprises means (15,16,17,18) for pre-positioning the side panels (3,4) with respect to the bottom panel (1).
